# EUROPÄISCHE PATENTSCHRIFT

(11) **EP 2 041 352 B1**
(45) Veröffentlichungstag und Bekanntmachung des Hinweises auf die Patenterteilung: **25.12.2013**
(21) Anmeldenummer: 07786005.4
(22) Anmeldetag: 12.07.2007
(51) Int. Cl.: D06F 37/30, H02K 11/04

(54) **ANTRIEBSVORRICHTUNG FÜR EINE WASCHMASCHINE**
DRIVE DEVICE FOR A WASHING MACHINE
DISPOSITIF D'ENTRAINEMENT POUR MACHINE À LAVER

(30) Priorität: 17.07.2006 DE 102006033317; 25.09.2006 DE 102006045146
(43) Veröffentlichungstag der Anmeldung: 01.04.2009
(73) Patentinhaber: Diehl AKO Stiftung & Co. KG, 88239 Wangen (DE)
(72) Erfinder: WEINMANN, Martin, 88339 Bad Waldsee (DE); MÜLLER, Alexander, 88339 Bad Waldsee - Reute (DE)
(74) Vertreter: Diehl Patentabteilung
(86) Internationale Anmeldenummer: PCT/EP2007/006173
(87) Internationale Veröffentlichungsnummer: WO 2008/009382

(56) Entgegenhaltungen:
- DE-A1- 3 602 606
- DE-A1- 19 727 165
- US-B1- 6 268 669

## Beschreibung

Die vorliegende Erfindung betrifft eine Antriebsvorrichtung für eine Waschmaschine nach dem Oberbegriff des Anspruchs 1.

Zum Betrieb einer Waschmaschine wird allgemein ein Antriebsmotor für die Waschmaschinentrommel mit einer elektronischen Regelung benötigt. Bei auf dem Markt erhältlichen Waschmaschinen ist die elektronische Regelung überwiegend getrennt vom Motor angeordnet. Auf diese Weise wird eine Übertragung der Motorwärme und der elektrischen und magnetischen Störfelder auf die Elektronik vermieden.

Es sind aber auch einige Ansätze bekannt, die Motorelektronik und den Elektromotor in einer kompakten Einheit zusammenzufügen. Solche Systeme sind zum Beispiel aus den Dokumenten OE 90 17 681 U1, DE 199 49 914 B4, US 6,394,767 B1, US 6,713 907 B2, DE 101 61 367 A1 und DE 197 03 655 C2 bekannt. In keinem dieser Dokumente ist allerdings eine Maßnahme zur Überwachung der Temperatur des Elektromotors und/oder der Elektronik beschrieben, sie betreffen lediglich verschiedene Konstruktionen zu deren Kühlung.

Zur Überwachung der Temperatur eines Elektromotors ist es bekannt, einen Temperatursensor in unmittelbarer Nähe zu einer Motorwicklung des Elektromotors anzuordnen, der den Motorstromkreis unterbrechen soll, sobald die Motorwicklung eine Temperatur erreicht, die für die Lackisolation der Motorwicklung kritisch ist. Wie zum Beispiel in der DE 102 52 754 A1 offenbart, kann als solcher Temperatursensor jede Art eines thermischen Widerstandes sowohl mit schaltender als auch nicht-schaltender Charakteristik eingesetzt werden. Derartige Temperatursensoren sind zum Beispiel Siliziumsensoren (KTY-Sensoren), Bimetallschalter oder Service-Mounted-Network-Resistors (SMN-Widerstände).

Die US 6,268,669 offenbart ein Lenkrad mit einem zusätzlichen elektronischen Antrieb, der in einem gemeinsamen Motorgehäuse einen Elektro-motor und die Motorsteuerung aufweist.

Es ist die Aufgabe der vorliegenden Erfindung, eine Antriebsvorrichtung für eine Waschmaschine bereitzustellen, bei der Elektromotor und Elektronik in einer kompakten Einheit angeordnet sind und gleichzeitig eine Temperaturüberwachung von Elektromotor und Elektronik in einfacher Weise gewährleistet ist.

Diese Aufgabe wird gelöst durch eine Antriebsvorrichtung für eine Waschmaschine mit den Merkmalen des Anspruchs 1. Vorteilhafte Ausgestaltungen und Weiterbildungen der Erfindung sind Gegenstand der abhängigen Ansprüche.

Die erfindungsgemäße Antriebsvorrichtung für eine Waschmaschine enthält einen Elektromotor; eine Antriebswelle, die zum Drehantrieb mit dem Elektromotor verbunden ist; und eine Elektronik zum Steuern des Betriebs des Elektromotors und ist weiter dadurch gekennzeichnet, dass der Elektromotor und die Elektronik in einer gemeinsamen Einheit integriert sind; dass die gemeinsame Einheit eine Wandung aufweist, die sowohl mit dem Elektromotor als auch mit der Elektronik thermisch gekoppelt ist; und dass die Elektronik einen Temperatursensor zum Erfassen der Temperatur der Wandung aufweist.

Durch die Integration von Elektromotor und Elektronik in eine gemeinsame Einheit wird eine kompakte Bauweise erzielt. Da sowohl der Elektromotor als auch die Elektronik (bzw. ihre Wärme erzeugenden Leistungsbauteile) mit einer Wandung dieser gemeinsamen Einheit thermisch gekoppelt sind, kann die von Elektromotor und Elektronik erzeugte Wärme in kompakter Bauweise über diese eine Wandung abgeführt werden. Außerdem wird für die Temperaturüberwachung von Elektromotor und Elektronik nur ein Temperatursensor benötigt, der die Temperatur dieser einen Wandung erfasst. Aufgrund des nur einen benötigten Temperatursensors können die Bauteil- und Montagekosten niedrig gehalten werden. Der Elektromotor selbst erfordert bei dieser Konstruktion allenfalls geringfügige Änderungen, und der zusätzliche Platzbedarf für die Elektronik in der gemeinsamen Einheit ist gering.

In einer Ausgestaltung der Erfindung sind die thermischen Kopplungen zwischen der Wandung und dem Elektromotor einerseits und zwischen der Wandung und der Elektronik andererseits so ausgebildet, dass eine kritische Temperatur für den Elektromotor und eine kritische Temperatur für die Elektronik bei Betrieb des Elektromotors bei etwa gleicher Messtemperatur des Temperatursensors erreicht werden. Auf diese Weise muss die vom Temperatursensor erfasste Temperatur der Wandung nur mit einem Temperaturschwellwert verglichen werden, der sowohl für die kritische Temperatur des Elektromotors als auch für die kritische Temperatur der Elektronik relevant ist.

In einer bevorzugten Ausführungsform der Erfindung wird die Wandung durch ein (hinteres) Lagerschild zum drehbaren Lagern der Antriebswelle bzw. des Rotors des Elektromotors gebildet, und der Elektromotor und die Elektronik sind jeweils auf den abgewandten Seiten der Wandung angeordnet.

Vorzugsweise ist ferner ein Lüfter zum Kühlen der Wandung vorgesehen, der in kompakter Weise ebenfalls in der gemeinsamen Einheit vorgesehen ist.

Zum besseren Schutz gegen Verschmutzungen kann die Elektronik ganz oder teilweise lackiert, vergossen und/oder mit Kunststoffabdeckungen versehen sein.

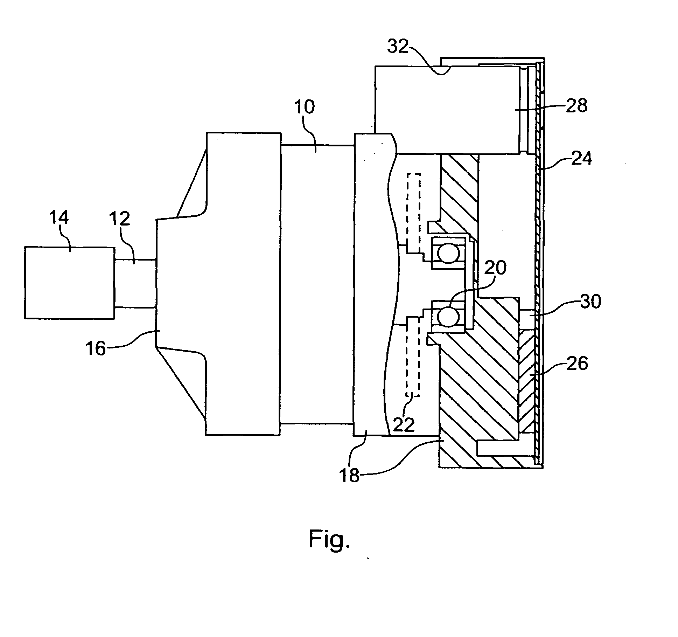

Obige sowie weitere Merkmale und Vorteile der Erfindung werden aus der nachfolgenden Beschreibung eines bevorzugten, nicht-einschränkenden Ausführungsbeispiels unter Bezugnahme auf die beiliegenden Zeichnungen besser verständlich. Darin zeigt die einzige Figur eine Seitenansicht, teilweise im Schnitt, einer Antriebsvorrichtung für eine Waschmaschine gemäß einem bevorzugten Ausführungsbeispiel.

Wie in der Figur veranschaulicht, enthält die Antriebsvorrichtung einen Elektromotor 10, der insbesondere Statorpakete und einen Rotor (nicht dargestellt) enthält. Der Rotor ist mit einer Antriebswelle 12 verbunden, welche die vom Elektromotor 10 erzeugte Drehkraft zum Beispiel über ein Riemenrad 14 auf die Trommel der Waschmaschine überträgt. Alternativ ist es aber auch möglich, die Antriebswelle 12 direkt mit der Waschmaschinentrommel zu koppeln.

Da der Elektromotor 10 im Vergleich zu herkömmlichen Antriebsvorrichtungen für Waschmaschinen nicht oder allenfalls geringfügig modifiziert werden muss, wird auf seine detaillierte Beschreibung verzichtet. Bei dem Elektromotor 10 kann es sich insbesondere sowohl um einen Asynchronmotor als auch um einen Synchronmotor mit einer oder mit mehreren Phasen handeln.

Die Antriebswelle 12 bzw. der Rotor des Elektromotors ist an einem vorderen A-Lagerschild 16 über ein entsprechendes Lager (nicht dargestellt) und an einem hinteren

B-Lagerschild 18 über ein entsprechendes Lager 20 drehbar gehalten. Über diese Lagerschilde 16, 18 ist die Antriebsvorrichtung in einer Waschmaschine zum Beispiel über Schraubverbindungen montierbar.

Zwischen den beiden Lagerschilden 16, 18 ist außerdem in herkömmlicher Weise optional ein Lüfter 22 zum Erzeugen eines Kühlluftstroms zur Kühlung des Elektromotors 10 und insbesondere auch des hinteren Lagerschildes 18 vorgesehen. Der Lüfter 22 ist zum Beispiel aus einem Lüfterrad aufgebaut, das auf der Antriebswelle 12 montiert ist und zusammen mit ihr gedreht wird. Das Lüfterrad wird somit automatisch mit der gleichen Drehzahl wie die Antriebswelle 12 gedreht, sodass bei einer höheren Drehzahl bzw. Leistung des Elektromotors 10 vom Lüfter 22 automatisch ein stärkerer Kühlluftstrom erzeugt wird. Die Erfindung ist nicht nur auf diese Ausführung und Anordnung des Lüfters 22 beschränkt; zum Beispiel kann der Lüfter auch separat von der Antriebswelle 12 in der Antriebsvorrichtung vorgesehen sein.

Die Waschmaschinen-Antriebsvorrichtung weist ferner eine Elektronik zur Steuerung des Elektromotors 10, insbesondere zu seiner Spannungsversorgung und Drehzahlregelung auf. Diese Elektronik umfasst insbesondere eine Leiterplatte 24, auf der unter anderem verschiedene Leistungsbauteile 26, 28 montiert sind. Bei einem zwischenkreisgespeisten Antrieb mit Asynchron- oder Synchronmotor sind diese Leistungsbauteile 26, 28 zum Beispiel Zwischenkreiskondensatoren, die Oberwellen- und Funkentstördrosseln, Netzgleichrichter und Einschaltstrombegrenzer wie NTC oder Festwiderstand.

Die äußere Gestalt des Motors unterscheidet sich kaum von jener eines herkömmlichen Waschmaschinenantriebs, lediglich das hintere Lagerschild 18 ist etwas modifiziert. Das hintere Lagerschild 18 bildet eine Zwischenwand (Wandung der Erfindung) der gemeinsamen Einheit, auf deren einen Seite der Elektromotor 10 angeordnet ist und auf deren anderen Seite die Elektronik zur Steuerung und Spannungsversorgung des Elektromotor 10 (Drehzahlregelung, Einphasen- oder Mehrphasenspannungen variabler Frequenz und Amplitude) angeordnet ist. Die empfindlichen Bereiche der Elektronik sind durch das Lagerschild 18 gegen elektrische und magnetische Störfelder des Elektromotors 10 abgeschirmt.

Die Lagerschilde 16, 18 sind fest mit dem Eisen des Stators des Elektromotors 10 verbunden, sodass sie sich über das Eisen mit der Erwärmung der Motorwicklung erwärmen und diese Wärme durch die Kühlung der Lagerschilde 16, 18 durch den

(optionalen) Lüfter 22 und ihre Verbindungen mit dem Waschmaschinengehäuse abführen. Zumindest ein Teil der Wärme erzeugenden Leistungsbauteile 26 der Elektronik steht ebenfalls mit dem hinteren Lagerschild 18 in thermischem Kontakt, indem die Leistungsbauteile 26 in engen Kontakt gegen die Rückseite des Lagerschildes 18 gedrückt werden. Auf diese Weise erwärmt sich das Lagerschild 18 sowohl durch den Elektromotor 10 als auch die Elektronik bzw. ihre Leistungsbauteile 26 und werden sowohl der Elektromotor 10 als auch die Leistungsbauteile 26 durch die gemeinsame Wandung 18 der gemeinsamen Einheit der Antriebsvorrichtung gekühlt.

Die Elektronik 24-30 enthält ferner einen Temperatursensor 30 zur Erfassung der Temperatur des hinteren Lagerschildes 18, der zur guten thermischen Kopplung zum Beispiel fest gegen die Rückseite des Lagerschildes 18 gedrückt ist. Als Temperatursensor 30 kann dabei grundsätzlich jede Art einer Temperaturerfassungsvorrichtung vorgesehen sein. Beim Erfassen einer kritischen Temperatur durch den Temperatursensor 30 schaltet die Elektronik 24-30 den Elektromotor 10 ab. Elektromotor 10 und Elektronik 24-30 können mit nur einer Messstelle gegen Überhitzung geschützt werden.

In einer bevorzugten Ausführungsform sind die thermische Kopplung des Elektromotors 10 mit dem Lagerschild 18 einerseits und die thermische Kopplung der Leistungsbauteile 26 mit dem Lagerschild 18 andererseits so ausgebildet, dass die kritische Temperatur für die Leistungsbauteile 26 und die kritische Betriebstemperatur für den Elektromotor 10, d.h. insbesondere für das Isolationssystem des Lackdrahtes der Motorwicklung, am Messpunkt des Temperatursensors 30 am Lagerschild 18 bei nahezu gleicher Messtemperatur erreicht werden. Auf diese Weise muss die vom Temperatursensor 30 erfasste Temperatur mit nur einem Temperaturschwellwert verglichen werden, der sowohl für den Elektromotor als auch für die Elektronik maßgebend ist.

Das oben beschriebene Prinzip lässt sich sowohl mit integrierten als auch mit diskreten Leistungsbauteilen 26 und Temperatursensoren 30 verwirklichen.

Wie in der Figur angedeutet, kann das hintere Lagerschild 18 ferner eine Durchbrechung 32 aufweisen, durch die ein Teil der Leistungsbauteile 28 der Elektronik, die üblicherweise nicht durch Verschmutzungen gefährdet sind bzw. einfach derart ausgebildet werden können, zumindest teilweise hindurchragen und so direkt durch den vom Lüfter 22 erzeugten Kühlluftstrom gekühlt werden können.

Der oben beschriebene Waschmaschinenantrieb stellt eine einfache, kompakte und kostengünstige Lösung zur Integration von Elektromotor und Elektronik mit effektiver Temperaturüberwachung sowohl von Elektromotor als auch Elektronik dar, der gleichzeitig einen ausreichenden Schutz und eine ausreichende Kühlung der Elektronik gewährleistet.

Um die Elektronik 24-30 besser gegen Verschmutzungen zu schützen, können verschiedene Zusatzmaßnahmen getroffen werden. Zum Beispiel kann die Elektronik ganz oder teilweise lackiert werden und/oder ganz oder teilweise vergossen werden. Die Elektronik kann auch ganz oder teilweise mit Kunststoffteilen abgedeckt werden.

Während in dem obigen Ausführungsbeispiel die Leiterplatte 24 der Elektronik hinter dem Lagerschild 18 angeordnet ist und von einer (nicht dargestellten) Motorabdeckung umschlossen ist, ist es auch denkbar, das hintere Lagerschild 18 so zu modifizieren, dass die Elektronik 24-30 innerhalb des Lagerschildes 18 aufgenommen werden kann.

### BEZUGSZIFFERNLISTE

- 10: Elektromotor
- 12: Antriebswelle
- 14: Riemenrad
- 16: vorderes Lagerschild
- 18: hinteres Lagerschild
- 20: hinteres Lager
- 22: Lüfter
- 24: Leiterplatte
- 26: Leistungsbauteile
- 28: Leistungsbauteile
- 30: Temperatursensor
- 32: Durchbrechung in 18

## Patentansprüche

1. Antriebsvorrichtung für eine Waschmaschine, mit
einem Elektromotor (10);
einer Antriebswelle (12), die zum Drehantrieb mit dem Elektromotor (10) verbunden und mit einer Trommel der Waschmaschine gekoppelt ist; und
einer Elektronik (24-30) zum Steuern des Betriebs des Elektromotors (10), **dadurch gekennzeichnet,**
**dass** der Elektromotor (10) und die Elektronik (24-30) in einer gemeinsamen Einheit integriert sind;
**dass** die gemeinsame Einheit eine Wandung (18) aufweist, die sowohl mit dem Elektromotor (10) als auch mit der Elektronik (24-30) thermisch gekoppelt ist; und dass die Elektronik (24-30) einen Temperatursensor (30) zum Erfassen der Temperatur der Wandung (18) aufweist, wobei die Temperaturüberwachung sowohl
des Elektromotors (10) als auch der Elektronik (24 - 30) mittels der erfassten
Temperatur der Wandung (18) erfolgt.

2. Antriebsvorrichtung nach Anspruch 1,
**dadurch gekennzeichnet,**
**dass** die thermischen Kopplungen zwischen der Wandung (18) und dem Elektromotor (10) einerseits und zwischen der Wandung (18) und der Elektronik (24-30) andererseits so ausgebildet sind, dass eine kritische Temperatur für den Elektromotor (10) und eine kritische Temperatur für die Elektronik (24-30) bei Betrieb des Elektromotors um Messpunkt des Temperatursensors (30) bei etwa gleicher Messtemperatur des Temperatursensors erreicht werden.

3. Antriebsvorrichtung nach Anspruch 1 oder 2,
**dadurch gekennzeichnet,**
**dass** die Elektronik (24-30) Wärme erzeugende Leistungsbauteile (26) umfasst, die in engem Kontakt gegen die Wandung (18) gedrückt sind.

4. Antriebsvorrichtung nach einem der vorherigen Ansprüche,
**dadurch gekennzeichnet,**
**dass** die Wandung (18) durch ein Lagerschild zum drehbaren Lagern der Antriebswelle (12) bzw. des Rotors des Elektromotors (10) gebildet ist.

5. Antriebsvorrichtung nach einem der vorherigen Ansprüche,
**dadurch gekennzeichnet,**
**dass** der Elektromotor (10) auf der einen Seite der Wandung (18) angeordnet ist und die Elektronik (24-30) auf der anderen Seite der Wandung (18) angeordnet ist.

6. Antriebsvorrichtung nach einem der vorherigen Ansprüche,
**dadurch gekennzeichnet,**
**dass** ferner ein Lüfter (22) zum Kühlen der Wandung (18) vorgesehen ist, der ebenfalls in der gemeinsamen Einheit vorgesehen ist.

7. Antriebsvorrichtung nach einem der vorherigen Ansprüche,
**dadurch gekennzeichnet,**
**dass** der Elektromotor (10) und die Elektronik (24-30) in einem gemeinsamen Motorgehäuse integriert sind.

8. Antriebsvorrichtung nach einem der vorherigen Ansprüche,
**dadurch gekennzeichnet,**
**dass** die Elektronik (24-30) zum Schutz gegen Staub und/oder Feuchtigkeit ganz oder teilweise lackiert ist.

9. Antriebsvorrichtung nach einem der vorherigen Ansprüche,
**dadurch gekennzeichnet,**
**dass** die Elektronik (24-30) ganz oder teilweise vergossen ist.

10. Antriebsvorrichtung nach einem der vorherigen Ansprüche,
**dadurch gekennzeichnet,**
**dass** die Elektronik (24-30) ganz oder teilweise mit Kunststoffabdeckungen versehen ist.

11. Antriebsvorrichtung nach einem der vorherigen Ansprüche,
**dadurch gekennzeichnet,**
**dass** die Wandung (18) im Wesentlichen rechteckig ausgebildet ist.

## Claims

1. Drive apparatus for a washing machine, comprising an electric motor (10);
a drive shaft (12) which is connected to the electric motor (10) for rotary drive purposes and is coupled to a drum of the washing machine; and
electronics (24-30) for controlling the operation of the electric motor (10),
**characterized**
**in that** the electric motor (10) and the electronics (24-30) are integrated in a common unit;
**in that** the common unit has a wall (18) which is thermally coupled both to the electric motor (10) and to the electronics (24-30); and
**in that** the electronics (24-30) have a temperature sensor (30) for detecting the temperature of the wall (18), the temperature monitoring both of the electric motor (10) and of the electronics (24-30) being carried out by means of the detected temperature of the wall (18).

2. Drive apparatus according to Claim 1, **characterized**
**in that** the thermal couplings between the wall (18) and the electric motor (10) on the one hand and between the wall (18) and the electronics (24-30) on the other are configured such that a critical temperature for the electric motor (10) and a critical temperature for the electronics (24-30) are reached at approximately the same measurement temperature of the temperature sensor at the measurement point of the temperature sensor (30) during operation of the electric motor.

3. Drive apparatus according to Claim 1 or 2, **characterized**
**in that** the electronics (24-30) comprise heat-generating power components (26) which are pressed into close contact against the wall (18).

4. Drive apparatus according to one of the preceding claims,
**characterized**
**in that** the wall (18) is formed by an end plate for rotatably mounting the drive shaft (12) and the rotor of the electric motor (10).

5. Drive apparatus according to one of the preceding claims,
**characterized**
**in that** the electric motor (10) is arranged on one side of the wall (18) and the electronics (24-30) are arranged on the other side of the wall (18).

6. Drive apparatus according to one of the preceding claims,
**characterized**
**in that** a fan (22) for cooling the wall (18) is also provided and is likewise provided in the common unit.

7. Drive apparatus according to one of the preceding claims,
**characterized**
**in that** the electric motor (10) and the electronics (24-30) are integrated in a common motor housing.

8. Drive apparatus according to one of the preceding claims,
**characterized**
**in that** the electronics (24-30) are entirely or partially coated in order to protect against dust and/or moisture.

9. Drive apparatus according to one of the preceding claims,
**characterized**
**in that** the electronics (24-30) are entirely or partially encapsulated.

10. Drive apparatus according to one of the preceding claims,
**characterized**
**in that** the electronics (24-30) are entirely or partially provided with plastic covers.

11. Drive apparatus according to one of the preceding claims,
**characterized**
**in that** the wall (18) is of substantially rectangular design.

## Revendications

1. Dispositif d'entraînement pour une machine à laver, comprenant
un moteur électrique (10) ;
un arbre d'entraînement (12), qui est connecté pour l'entraînement en rotation au moteur électrique (10) et qui est accouplé à un tambour de la machine à laver ; et
un système électronique (24-30) pour commander le fonctionnement du moteur électrique (10), **caractérisé en ce que**
le moteur électrique (10) et le système électronique (24-30) sont intégrés dans une unité commune ;
l'unité commune présente une paroi (18) qui est accouplée thermiquement à la fois au moteur électrique (10) et au système électronique (24-30) ; et
le système électronique (24-30) présente un capteur de température (30) pour détecter la température de la paroi (18), le contrôle de la température du moteur électrique (10) ainsi que du système électronique (24-30) s'effectuant au moyen de la température détectée de la paroi (18).

2. Dispositif d'entraînement selon la revendication 1,
**caractérisé en ce que** les accouplements thermiques entre la paroi (18) et le moteur électrique (10) d'une part et entre la paroi (18) et le système électronique (24-30) d'autre part sont réalisés de telle sorte qu'une température critique pour le moteur électrique (10) et une température critique pour le système électronique (24-30) soient atteintes lors du fonctionnement du moteur électrique au point de mesure du capteur de température (30) approximativement pour la même température de mesure du capteur de température.

3. Dispositif d'entraînement selon la revendication 1 ou 2,
**caractérisé en ce que**
le système électronique (24-30) comprend des composants de puissance générant de la chaleur (26), lesquels sont pressés en contact étroit contre la paroi (18).

4. Dispositif d'entraînement selon l'une quelconque des revendications précédentes,
**caractérisé en ce que**
la paroi (18) est formée par une plaque formant palier pour le support rotatif de l'arbre d'entraînement (12) ou du rotor du moteur électrique (10).

5. Dispositif d'entraînement selon l'une quelconque des revendications précédentes,
**caractérisé en ce que**
le moteur électrique (10) est disposé d'un côté de la paroi (18) et le système électronique (24-30) est disposé de l'autre côté de la paroi (18).

6. Dispositif d'entraînement selon l'une quelconque des revendications précédentes,
**caractérisé en ce**
**qu'**il est en outre prévu un ventilateur (22) pour refroidir la paroi (18), lequel est également prévu dans l'unité commune.

7. Dispositif d'entraînement selon l'une quelconque des revendications précédentes,
**caractérisé en ce que**
le moteur électrique (10) et le système électronique (24-30) sont intégrés dans un boîtier de moteur commun.

8. Dispositif d'entraînement selon l'une quelconque des revendications précédentes,
**caractérisé en ce que**
le système électronique (24-30) est complètement ou partiellement verni pour le protéger contre la poussière et/ou l'humidité.

9. Dispositif d'entraînement selon l'une quelconque des revendications précédentes,
**caractérisé en ce que**
le système électronique (24-30) est complètement ou partiellement moulé.

10. Dispositif d'entraînement selon l'une quelconque des revendications précédentes,
**caractérisé en ce que**
le système électronique (24-30) est complètement ou partiellement pourvu de recouvrements en plastique.

11. Dispositif d'entraînement selon l'une quelconque des revendications précédentes,
**caractérisé en ce que**
la paroi (18) est réalisée sous forme essentiellement rectangulaire.
